# EUROPÄISCHE PATENTANMELDUNG

(11) **EP 3 404 594 A1**
(43) Veröffentlichungstag der Anmeldung: **21.11.2018**
(21) Anmeldenummer: 17172012.1
(22) Anmeldetag: 19.05.2017
(51) Int. Cl.: G06Q 10/08

(54) **VERFAHREN ZUM FESTSTELLEN EINER ORDNUNGSGEMÄSSEN VERWENDUNG EINES IDENTIFIKATORS FÜR EIN SORTIERSTÜCK IN EINEM SORTIERSYSTEM**

(71) Anmelder: Siemens Aktiengesellschaft, 80333 München (DE)
(72) Erfinder: ILLMAIER, Jörg-Andreas, 8280 Kreuzlingen (CH); THURNER, Georgia, 88709 Hagnau (DE)
(74) Vertreter: Maier, Daniel Oliver

(57) **Zusammenfassung**

Die Erfindung offenbart ein Verfahren zum Feststellen einer ordnungsgemäßen Verwendung eines eindeutigen, auf einem Sortierstück (2), angebrachten Identifikators (Id*) in einem Sortierprozess, wobei das Sortierstück (2) anhand eindeutiger sensorischer Objekteigenschaften (SE*) identifizierbar ist und mittels des Identifikators (Id*) eine Berechtigung für den Sortierprozess nachweisbar ist. Das Verfahren umfasst die Verfahrensschritte:
a) Bereitstellen einer Datenstruktur (4), in welcher Identifikatoren (Id') und sensorische Objekteigenschaften (SE') Sortierstücken (2') eindeutig zugeordnet abspeicherbar sind;
b) Erfassen des Identifikators (Id*) des Sortierstücks (2) und einer sensorischen Objekteigenschaft (SE*) des Sortierstücks (2) als erfasste eindeutige Zuordnung.
c) Abgleichen des erfassten Identifikators (Id*) und/oder der erfassten sensorischen Objekteigenschaft (SE*) mit den bereits in der Datenstruktur (4) gespeicherten Identifikatoren (Id') und/oder sensorischen Objekteigenschaften (SE').
d) Feststellen einer ordnungsgemäßen Verwendung, wenn in der Datenstruktur (4) beim Abgleichen keine Zuordnung gefunden wird, die der erfassten eindeutigen Zuordnung von erfasstem Identifikator (Id*) und erfasster sensorischer Objekteigenschaft (SE*) widerspricht.

## Beschreibung

Die vorliegende Erfindung betrifft das technische Gebiet der Sortiersysteme, insbesondere Postsortiersysteme und Gepäckförderanlagen.

Um Sortierstücke identifizierbar zu machen, gibt man den Sortierstücken eindeutige Identifikatoren und assoziiert diese mit dem Sortierstück, indem die Identifikatoren in erkennbarer Form, beispielsweise als durch ein Bildverarbeitungssystem mit Scanner lesbarer Barcode, als 2D-Code oder als Zahlencode, auf dem Sortierstück aufgebracht wird. Auf diese Weise kann das Sortierstück überall, wo der aufgebrachte Identifikator ermittelt und gelesen werden kann, identifiziert werden. Eine häufige Anwendung dieses Verfahrens besteht darin, dass dem Sortierstück weitere Daten, beispielsweise Auslieferadresse oder Sortierdaten, in einer Datenhaltung unter dem Identifikator des Sortierstücks zugeordnet gespeichert werden. Wird das Sortierstück dann identifiziert, kann lesend und/oder schreibend auf diese Daten zugegriffen werden und die Daten können anwendungsabhängig genutzt und/oder modifiziert werden. In anderen Fällen werden zusammen mit dem Identifikator weitere Daten in der auf dem Sortierstück aufgebrachten Kennzeichnung hinterlegt, so dass diese Daten auch ohne Zugriff auf eine Datenhaltung verfügbar sind. Häufig benötigt ein Sortierstück einen Identifikator definierter Art als Kennung, um in einem System, beispielsweise ein Sortiersystem eines Postdienstes oder ein Gepäckbeförderungssystem im Flughafenbereich, überhaupt sortiert zu werden. Im postalischen Bereich treten insbesondere die Situationen Freimachung und Tracking auf. Bei der Freimachung wird ein eindeutiger Identifikator, typischerweise ein 2D-Code, der den Identifikator der Sendung repräsentiert, auf der Postsendung aufgebracht. Der Freimachungswert und ggf. weitere Informationen werden direkt in dem 2D-Code oder über den Identifikator zugreifbar in einer Datenhaltung abgespeichert. Beim Tracking wird auf der Postsendung ein eindeutiger Bar- oder 2D-Code, der den Identifikator repräsentiert, aufgebracht. Passiert die Postsendung während des Sortierprozesses einen Sortierpunkt, an dem der Identifikator des Objekts erkannt wird, werden Sortierpunkt und Zeitpunkt in den zugehörigen, über den Identifikator zugreifbaren Daten in einer Datenhaltung gespeichert. So kann jederzeit abgerufen werden, welche Sortierpunkte eine Sendung wann passiert hat.

Es kommt vor, dass die Identifikatoren eines Sortierstücks missbräuchlich entfernt oder dupliziert werden und auf einem anderen Sortierstück aufgebracht werden. Dadurch werden die mit dem Identifikator assoziierten Daten fälschlicherweise einem anderen Objekt zugeordnet. Im postalischen Bereich wird dadurch eine Sendung fälschlicherweise als frankiert gekennzeichnet und ohne bezahltes Entgelt befördert, dem Postdienst entstehen hierdurch sowohl Kosten, als auch fehlende Einnahmen. Es besteht daher die Notwendigkeit, solch eine missbräuchliche Verwendung des Identifikators mit geringer Fehlerquote aufzudecken.

Im Rahmen von Revenue Protection im postalischen Umfeld ziehen bekannte Methoden zur Detektion des Missbrauchs von Poststücken zugeordneten Kennzeichnungen, die einen eindeutigen Identifikator repräsentieren, kontextbezogene Informationen heran und ein Missbrauch wird anhand je nach Anwendungsfall definierten Missbrauchskriterien als Verdachtsfall angezeigt. Beispielsweise werden der Erzeugung und der Erkennung der Kennzeichnung Zeitstempel zugeordnet und Ort und Anzahl der Erkennung der Kennzeichnung werden erfasst. Aus diesen Informationen und dem Kontext, in dem die Sortierstücke im Sortierprozess des Postdienstes auftreten, lassen sich zumindest Verdachtsfälle detektieren. So kann aus dem Zeitstempel der Erzeugung und der Erkennung der Kennzeichnung auf eine Fälschung geschlossen werden, wenn für die Kennzeichnung eine Verfallzeit, die zum Zeitpunkt der Erzeugung startet, angenommen wird. In anderen Fällen ist vielleicht bekannt, wann ein Sortierstück, beispielsweise ein Rücksendecouvert mit einer Freimachung, an einen Kunden ausgeliefert wurde. Dann kann auf einen Missbrauch geschlossen werden, wenn die mit dem Sortierstück assoziierte Kennzeichnung später erneut auftritt bzw. erkannt wird. Für eine Bestätigung des Vorliegens einer missbräuchlichen Nutzung des Identifikators der Kennzeichnung sind jedoch noch weitere Recherchen notwendig. Sie bestehen heute in der Regel darin, dass alle Bilder von Postsendungen mit solchen Kennzeichnungen aufgezeichnet werden und im Verdachtsfall ein Vergleich der Bilder mit gleichem Identifikator bzw. Kennzeichnung an einem BildschirmArbeitsplatz durchgeführt wird.

Das Feststellen einer missbräuchlichen Verwendung mittels kontextbezogener Informationen produziert bei zu enggefasster Definition von Missbrauchskriterien zu häufig falsch positive Verdachtsfälle, die noch weitere Abklärung erfordern. Bei zu weitgefasster Definition von Missbrauchskriterien werden hingegen nicht alle Fälle einer ordnungswidrigen Verwendung erfasst. Außerdem erfordert die Definition von Missbrauchskriterien ein umfangreiches Wissen über den Sortierprozess und ist damit insbesondere abhängig von dessen Veränderungen. Gewöhnlich tritt ja ein Objekt mit einer Kennzeichnung in einem Sortierprozess mehrfach auf. Deshalb ist bei jedem Auftreten zu entscheiden, ob das mehrfache Auftreten durch den Sortierprozess bedingt ist oder aber ein Missbrauch vorliegt.

Der vorliegenden Erfindung liegt daher die Aufgabe zugrunde, ein zuverlässiges, effizientes, universelles und vom Sortierprozess unabhängiges Feststellen einer ordnungsgemäßen bzw. missbräuchlichen Verwendung eines auf einem Sortierstück angebrachten Identifikators, mittels dem eine Berechtigung für den Sortierprozess nachweisbar ist, zu gewährleisten. Diese Aufgabe wird durch die in den unabhängigen Ansprüchen beschriebenen Lösungen gelöst.

Die erfindungsgemäße Lösung sieht ein Verfahren zum Feststellen einer ordnungsgemäßen Verwendung eines eindeutigen, auf einem Sortierstück, vorzugsweise einer Postsendung oder einem Gepäckstück, angebrachten Identifikators in einem Sortierprozess, vor, wobei das Sortierstück anhand eindeutiger sensorischer Objekteigenschaften identifizierbar ist und mittels des Identifikators eine Berechtigung für den Sortierprozess nachweisbar ist, umfassend die Verfahrensschritte:
a) Bereitstellen einer Datenstruktur, in welcher Identifikatoren und sensorische Objekteigenschaften Sortierstücken eindeutig zugeordnet abspeicherbar sind.
b) Erfassen des Identifikators des Sortierstücks und einer sensorischen Objekteigenschaft des Sortierstücks als erfasste eindeutige Zuordnung.
c) Abgleichen des erfassten Identifikators und/oder der erfassten sensorischen Objekteigenschaft mit den bereits in der Datenstruktur gespeicherten Identifikatoren und/oder sensorischen Objekteigenschaften.
d) Feststellen einer ordnungsgemäßen Verwendung, wenn in der Datenstruktur beim Abgleichen keine Zuordnung gefunden wird, die der erfassten eindeutigen Zuordnung von erfasstem Identifikator und erfasster sensorischer Objekteigenschaft widerspricht.

Über einen Identifikator soll vorzugsweise auf eindeutige Weise eine Berechtigung für den Sortierprozess nachweisbar sein, bei einer Postsortierung agiert beispielsweise eine Freimachung ganz oder zumindest teilweise als Identifikator. Es besteht keine Notwendigkeit, kann aber so sein, dass der Identifikator, der auf dem Sortierstück angebracht ist, a priori mit dem Sortierstück selber verknüpfbar ist. Die Bezeichnung Identifikator umfasst sowohl das auf dem Sortierstück angebrachte Informationsabbild, als auch das in der Datenstruktur abspeicherbare Datenelement des Identifikators. Ein Anbringen des Identifikators auf einem Sortierstück kann durch Aufkleben, Anbringen, händisches Beschreiben, Bedrucken o.ä. erfolgen.

Die sensorische Objekteigenschaft kann eine oder mehrere erfasste Merkmale umfassen, wobei die sensorische Objekteigenschaft vorzugsweise ein Merkmal ist, das ohne Veränderung des Sortierstücks keine Änderung erfährt und somit dem Sortierstück eindeutig zugeordnet werden kann. Die sensorischen Objekteigenschaften sind für sich und/oder im Zusammenhang mit dem Identifikator eindeutig.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform kann bei festgestellter ordnungsgemäßer Verwendung ein Abspeichern der erfassten eindeutigen Zuordnung von erfasstem Identifikator und erfasster sensorischer Objekteigenschaft in der Datenstruktur erfolgen. So kann in der Datenstruktur auf die Zuordnung der festgestellten ordnungsgemäßen Verwendung zurückgegriffen werden, ein erfasstes erstmaliges oder wiederholtes Auftreten wird so in der Datenstruktur abgebildet.

Gemäß einer weiteren Ausführungsform können die sensorischen Objekteigenschaften den auf dem Sortierstück angebrachten Identifikator, vorzugsweise Position und/oder Ausrichtung und/oder Größe des Identifikators, ganz oder zumindest teilweise umfassen. Auf diese Weise trägt der Identifikator selbst zur Eindeutigkeit der sensorischen Objekteigenschaft bei. So können auch zwei komplett gleichaussehende Sortierstücke anhand ihrer Identifikatoren voneinander unterschieden werden, wenn denn nur die Identifikatoren an unterschiedlichen Positionen angebracht werden.

Eine Zuordnung der erfassten eindeutigen Zuordnung von erfasstem Identifikator und erfasster sensorischer Objekteigenschaft kann widersprechen, wenn zwar der Identifikator der Zuordnung mit dem erfassten Identifikator übereinstimmt, aber die sensorische Objekteigenschaft der Zuordnung mit der erfassten sensorischen Objekteigenschaft mit hinreichender Genauigkeit nicht übereinstimmt. Dieser Sachverhalt deutet auf eine mehrfache Verwendung des erfassten Identifikators, da die voneinander abweichenden sensorischen Objekteigenschaften für zwei unterschiedliche Sortierstücke sprechen. Damit eine marginale Veränderung der sensorischen Objekteigenschaft, beispielsweise verursacht durch leichte Gebrauchsspuren wie marginale Kratzer o.ä. oder Abweichungen bei der Erfassung, nicht fälschlicherweise als missbräuchliche Verwendung interpretiert wird, muss nur eine hinreichende Genauigkeit bei der Übereinstimmung vorliegen, keine exakte Übereinstimmung.

Um bei einem noch nicht erfolgten Erfassen der zu einem Sortierstück gehörigen Zuordnung und/oder nur des Identifikators oder der sensorischen Objekteigenschaft nicht fälschlicherweise eine missbräuchliche Verwendung festzustellen, kann für den Fall, dass in der Datenstruktur keine Zuordnung der erfassten sensorischen Objekteigenschaft und/oder des erfassten Identifikators auffindbar ist, eine ordnungsgemäße Verwendung angenommen werden. Dieser Fall bedeutet einfach, dass noch keine vollständige Zuordnung vorliegt oder nur einer der beiden Werte, sensorische Objekteigenschaft oder Identifikator, wurde bereits erfasst. Identifikatoren können bereits in der Datenstruktur vorhanden sein, wenn diese bei ihrer Generierung, also ohne bereits vorhandenen eindeutigen Bezug zum Sortierstück, in die Datenstruktur aufgenommen wurden. So kann nur schwer eine komplette Fälschung von Identifikatoren erfolgen, da der gesamte generierte Satz in der Datenstruktur abgebildet ist.

Gemäß einer Ausführungsform kann die sensorische Objekteigenschaft zumindest teilweise in dem Identifikator abgebildet sein. Dies erfordert, dass diese Information bereits beim Erstellen des Identifikators vorhanden sein muss. Ein Beispiel hierfür wäre ein Verwendungszweck, so kann der Identifikator den zulässigen Gewichtsbereich des Sortierstücks abbilden oder ob er für einen Brief oder ein Paket verwendet werden darf. Bei Aufgabe einer Postsendung in einer Postdienststelle könnte der Identifikator auch bereits am Anfang des Sortierprozesses, vorzugsweise direkt am Schalter der Postdienststelle, vollständig erstellt werden. Auch könnte der Verteilcode der Empfängeradresse in der Postdienststelle ermittelt und im Identifikator hinterlegt bzw. abgebildet werden.

Gemäß einer weiteren Ausführungsform kann das Verfahren zudem die Verfahrensschritte umfassen:
a) Erfassen eines Abbilds des Sortierstücks.
b) Abspeichern des Abbilds als Zuordnung in der Datenstruktur.
c) Heranziehen des Abbilds des Sortierstücks zum Feststellen einer ordnungsgemäßen Nutzung, indem in der Datenstruktur abgeglichen wird, ob zu dieser Zuordnung bereits ein Abbild in der Datenstruktur existiert, wenn mit hinreichender Genauigkeit festgestellt wurde, dass die erfasste sensorische Objekteigenschaft in der Datenstruktur nicht vorhanden ist. Wenn die erfasste sensorische Objekteigenschaft dann mit genügend hoher Glaubwürdigkeit nicht mit dem erfassten Identifikator übereinstimmt, kann für ein definitives Feststellen einer ordungsgemäßen bzw. ordnungswidrigen Verwendung des erfassten Identifikators dann noch das Abbild herangezogen werden und mit einem bereits in der Datenstruktur existierenden Abbild verglichen werden. Dieses Vorgehen ermöglicht noch eine weitere Absicherung einer festgestellten ordnungsgemäßen bzw. ordnungswidrigen Verwendung des Identifikators in Zweifelsfällen, die beispielsweise verursacht sein können durch eine nicht missbräuchliche, die sensorische Objekteigenschaft verändernde Beschädigung des Sortierstücks oder durch einen mutwilligen Missbrauch. Auf diese Weise kann die Fehlerquote noch geringer gehalten werden.

Um eine dem Sortierstück und/oder dem Sortierprozess angepasste oder optimierte sensorische Objekteigenschaft verwenden zu können, kann die sensorische Objekteigenschaft eine oder mehrere der folgenden Merkmale umfassen: eine Sortierstückdimension, vorzugsweisse Abmessungen und/oder Volumen, Gewicht, Inhaltseigenschaft des Sortierstücks, vorzugsweise erhaltbar durch Röntgenstrahlung, Position des Identifikators auf dem Sortierstück, Strahlungsreflektionseigenschaft, Fluoreszenzeigenschaft, Materialeigenschaften des Sortierstücks und Beschriftungen des Sortierstücks.

Bei festgestellter ordnungswidriger Verwendung des angebrachten Identifikators kann das Sortierstück mit einer Markierung versehen werden. So ist die ordnungswidrige Verwendung anhand der Markierung einfach ersichtlich und das Sortierstück kann im Folgenden gesondert behandelt werden. Anhand der Markierung ist die ordnungswidrige Verwendung auch ohne Heranziehen der Datenstruktur ersichtlich.

Um zu verhindern, dass durch Weiterbehandlung des Sortierstücks weitere Kosten verursacht werden, kann ein Ausschleusen des Sortierstücks aus dem Sortierprozess bei festgestellter ordnungswidriger Verwendung des angebrachten Identifikators erfolgen.

Gemäß einer Ausführungsform kann der angebrachte Identifikator maschinenlesbar und/oder menschenlesbar sein.

Hinsichtlich einer Vorrichtung wird die vorstehend genannte Aufgabe gelöst durch ein Sortiersystem für einen Sortierprozess von Sortierstücken, vorzugsweise Postsendungen oder Gepäckstücken, wobei das Sortierstück anhand eindeutiger sensorischer Objekteigenschaften identifizierbar ist und mittels des Identifikators eine Berechtigung für den Sortierprozess nachweisbar ist, umfassend:
a) eine zum Erfassen der sensorischen Objekteigenschaft und des Identifikators eines Sortierstücks ausgestaltete Erfassungseinheit (10),
b) eine Datenstruktur, in welcher Identifikatoren und sensorische Objekteigenschaften der Sortiergüter als eindeutige Zuordnung speicherbar sind,
c) eine die Datenstrukur umfassende Steuereinheit, ausgestaltet zum Abgleichen des erfassten Identifikators und/oder der erfassten sensorischen Objekteigenschaft mit den in der Datenstruktur gespeicherten Identifikatoren und/oder sensorischen Objekteigenschaften und
d) ein Logikmodul, welches ausgestaltet ist, eine ordnungsgemäße und ordnungswidrige Verwendung des erfassten Identifikators anhand eines Abgleichergebnisses der Steuereinheit festzustellen und die festgestellte ordnungsgemäße oder ordnungswidrige Verwendung an die Steuereinheit zu übermitteln.

Das Logikmodul kann ausgestaltet sein, eine ordnungsgemäße Verwendung festzustellen, wenn das Abgleichergebnis keine Zuordnung ist, die der erfassten eindeutigen Zuordnung von erfasstem Identifikator und erfasster sensorischer Objekteigenschaft widerspricht. Logikmodule sind für ein besonders effizientes und rasches Abgleichen prädestiniert.

Damit das Sortiersystem eine mehrfache Verwendung eines Identifikators für unterschiedliche Sortiergüter erkennt, kann eine Zuordnung der erfassten eindeutigen Zuordnung von erfasstem Identifikator und erfasster sensorischer Objekteigenschaft widersprechen, wenn der Identifikator der Zuordnung übereinstimmt mit dem erfassten Identifikator, aber die sensorische Objekteigenschaft der Zuordnung mit der erfassten sensorischen Objekteigenschaft mit hinreichender Genauigkeit nicht übereinstimmt.

Gemäß einer Ausführungsform können die sensorischen Objekteigenschaften den auf dem Sortierstück angebrachten Identifikator, vorzugsweise Position und/oder Ausrichtung und/oder Größe des Identifikators, ganz oder zumindest teilweise umfassen.

Ausführungsformen der Erfindung werden nachfolgend anhand der Figuren beispielsweise näher erläutert. Dabei zeigen:
- Figur 1: eine erfasste Zuordnung und Zuordnungen der Datenstruktur; und
- Figur 2: schematisch ein erfindungsgemäßes Sortiersystem.

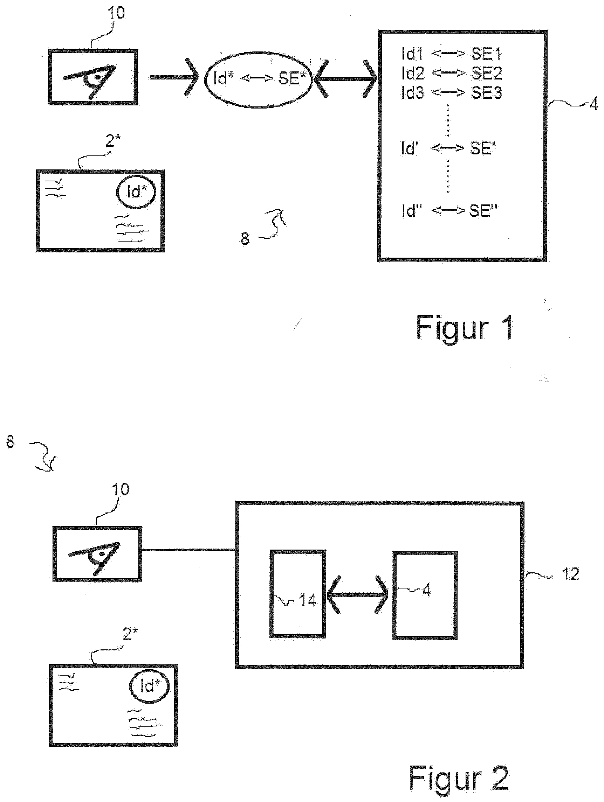

Figur 1 zeigt gemäß einer Ausführungsform der Erfindung eine erfasste Zuordnung und Zuordnungen der Datenstruktur 4. Die Datenstruktur 4 dient zum Abspeichern von Identifikatoren Id1, Id2, Id3, ... und sensorischen Objekteigenschaften SE1, SE2, SE3, ... einer Vielzahl von Sortierstücken 2.1, 2.2, 2.2, ... in eindeutiger Zuordnung. Das Sortierstück 2*, hier ein Brief, möglich sind jedoch auch andere Postsendungen, Gepäckstücke oder prinzipiell jede Art von automatisiert sortierbaren Sortierguts, wird anhand seiner Adressdaten sortiert. Eine Erfassungseinheit 10 erfasst den Identifikator Id* und mindestens eine sensorische Objekteigenschaft SE*, anhand derer der Brief eindeutig identifiziert werden kann. Die sensorische Objekteigenschaft SE* ist eine Fingerprint-Eigenschaft und nutzt die Tatsache, dass keine zwei Briefe samt ihrer aufgebrachten Identifikatoren Id*, exakt gleich aussehen. Sensorische Objekteigenschaften SE* umfassen Merkmale wie optische Eigenschaften, beispielswiese Oberflächeneigenschaften, Fluoreszensreflektionseigenschaften, Briefmarken und Logos sein, ebenso Sortierstückdimensionen wie Größe und Volumen und/oder Gewicht, Beschriftungen des Sortierstücks 2 wie Adresstexte, und Materialeigenschaften des Sortierstücks 2 wie Papierverschmutzungen oder die Materialart und/oder Form der Verpackung (Pakete werden mit bräunlichem Papier, das unterschiedliche Einschlüsse hat, verpackt). Je nach Ausgestaltung der Erfassungseinheit 10 können alle diese Merkmale in den sensorischen Objekteigenschaften SE ganz oder teilweise abgebildet werden.

Anhand der erfassten sensorischen Objekteigenschaft SE* kann der Brief über die gesamte Sortierprozesskette, ob bei der Nachverfolgung im Sortierzentrum, oder grenzüberschreitend und bei Paketen von Fremddienstleistern verfolgt werden, denn sensorische Objekteigenschaften SE sind zumindest nahezu so eindeutig wie ein Fingerabdruck. Im Missbrauchsfall sehen keine zwei Briefe samt aufgebrachtem Identifikator gleich aus. Selbst zwei bis auf den Identifikator nahezu identisch aussehende Briefe, beispielsweise automatisch versendete Kontoauszüge einer Bank, können anhand ihrer sensorischen Objekteigenschaften SE voneinander unterschieden werden, da die sensorischen Objekteigenschaften SE den auf dem Sortierstück 2 angebrachten Identifikator Id umfassen. Die sensorischen Objekteigenschaften SE können Markierungseigenschaften des Identifikators, beispielsweise Position und/oder Ausrichtung und/oder Größe des Identifikators, und/oder den Identifikator Id selber abbilden. Im Folgenden wird ein Verfahren vorgestellt, mit dem beim Auftreten eines Sortierstücks 2* mit "falscher", also missbräuchlicher Markierung und somit missbräuchlicher Verwendung eines Identifikators Id*, automatisch ermittelt werden kann, dass die Kennung nicht zu dem Sortierstück 2* gehört - oder anders gesagt, dass das Sortierstück 2* nicht die Berechtigung für die Verwendung des über die aufgebrachte Kennung ermittelten Identifikators Id* besitzt.

Der Identifikator Id* ist als Kennzeichen auf dem Brief angebracht, vorzugsweise in maschinenlesbarer und/oder menschenlesbarer, codierter und/oder uncodierter Form, beispielsweise als Barcode oder DataMatrix-Code. Der Identifikator Id* kann von einer auf den Brief gedruckten Freimachung, beispielsweise als Entwertungsstempel einer Briefmarke oder als gutscheinhafte Rücksendefreimachung, umfasst sein, wobei für den Postdienstleister großes Interesse besteht, dass diese nur ordnungsgemäß, im Regelfall also nur einmal, verwendet wird.

Die Markierung des Briefes mit dem Identifikator Id* kann auch händisch geschehen, wenn der Postdienstleister eine Freimachung als codierte Abfolge von Ziffern und/oder Nummern ausgibt, die der Kunde dann händisch auf den Brief schreibt. Hier besteht großes Missbrauchspotential, der Kunde könnte ja einfach die codierte Abfolge auf mehrere Briefe aufschreiben. Daher muss eindeutig feststellbar sein, ob die Abfolge ordnungsgemäß nur für eine, oder aber ordnungswidrig für mehrere Postsendungen verwendet wird. Die Erfassungseinheit 10 kann zudem zum Erfassen aller relevanten Objekte, beispielsweise Adressdaten, unabhängig davon ob maschinen- und handgeschriebene, ob mit lateinischen, kyrillischen, arabischen oder chinesischen Schriftzeichen, herangezogen werden.

Die Erfassungseinheit 10 liefert also eine Zuordnung von erfasstem Identifikator Id* und erfasster sensorischer Objekteigenschaft SE*. Bei einem erstmaligen Erfassen wird diese Zuordnung in der Datenstruktur 4 abgespeichert. Das Abspeichern kann als erster und/oder letzter Schritt der nachfolgend beschriebenen Verfahrensschritte erfolgen. Nun wird überprüft, ob der erfasste Identifikator Id* und/oder die erfasste sensorische Objekteigenschaft SE* bereits in der Datenstruktur 4 vorhanden sind, die erfasste Zuordnung von erfasstem Identifikator Id* und erfasster sensorischer Objekteigenschaft SE* wird also mit den bereits in der Datenstruktur 4 gespeicherten Identifikatoren Id1, Id2, Id3, ... und/oder sensorischen Objekteigenschaften SE1, SE2, SE3, ... abgeglichen. Es ist möglich, dass der Postdienstleister bereits vor Ausgabe seiner Identifikatoren Id eine Abspeicherung in der Datenstruktur 4 ausgeführt hat, beispielsweise um ein betrügerisches Generieren von gefälschten Identifikatoren zu erkennen. In diesem Fall ist bei einem ersten Erfassen des erfassten Identifikators Id* dem erfassten Identifikator Id* noch keine sensorische Objekteigenschaft SE* in der Datenstruktur 4 zugeordnet. Falls der Identifikator Id* nur für das Frankieren eines Briefes, nicht jedoch für das Frankieren eines Paketes gedacht war, könnte dies in dem Identifikator Id* codiert abgebildet sein. Dies könnte jedoch auch als Teil der sensorischen Objekteigenschaft SE* oder als weitere Zuordnung abgespeichert werden. Wenn in der Datenstruktur 4 beim Abgleichen keine Zuordnung gefunden wird, die der erfassten eindeutigen Zuordnung von erfasstem Identifikator Id* und erfasster sensorischer Objekteigenschaft SE* widerspricht, kann zunächst einmal eine ordnungsgemäße Verwendung des erfassten Identifikators Id* angenommen werden. Bei festgestellter ordnungsgemäßer Verwendung wird die erfasste Zuordnung in der Datenstruktur 4 abgespeichert. Ein Sortierstück 2, das mit einem Identifikator Id markiert ist, dessen ordnungswidrige Verwendung festgestellt wurde, kann gemäß weiteren Ausführungsformen, die beliebig miteinander kombinierbar sind, weiterbehandelt werden.

Eine mehrfache Verwendung des erfassten Identifikators Id* ist in den meisten Szenarien eine ordnungswidrige Verwendung. Diese liegt mit großer Wahrscheinlichkeit vor, wenn das Abgleichen ergibt, dass sich die Zuordnung von erfasstem Identifikator Id* und erfasster sensorischer Objekteigenschaft SE* widerspricht, wenn zwar der Identifikator der Zuordnung Id' mit dem erfassten Identifikator Id* übereinstimmt, aber die sensorische Objekteigenschaft der Zuordnung SE' mit der erfassten sensorischen Objekteigenschaft SE* nicht mit hinreichender Genauigkeit übereinstimmt. Nicht übereinstimmende sensorische Objekteigenschaften SE', SE* bei übereinstimmenden Identifikatoren Id', Id* deuten darauf hin, dass der gleiche Identifikator Id* für ein erstes Sortierstück 2* mit den sensorischen Objekteigenschaften SE* und für ein zweites Sortierstück 2' mit den sensorischen Objekteigenschaften SE' verwendet wurde, da die sensorischen Objekteigenschaften SE*, SE' eigentlich eindeutig sind. Eine Beschädigung eines Sortierstücks 2* während des Sortierprozesses könnte jedoch auch zu einer Veränderung seiner sensorischen Objekteigenschaften SE* hin zu SE' geführt haben. Um auszuschließen, dass eine fehlerhafte Missbrauchserkennung stattgefunden hat, kann im Sortierprozess von jedem Sortierstück 2 ein Abbild aufgenommen werden und dieses der Zuordnung von Identifikator Id und sensorischer Objekteigenschaft SE als weitere Zuordnung in der Datenstruktur 4 abgespeichert werden. Aus Effizienzgründen (Speicher und Rechenaufwand) wird man in der Regel aber nicht zunächst die Abbilder für einen Abgleich nutzen, sondern auf den Abbildern basierende Eigenschaften oder von der Erfassungseinheit 10 erfasste Merkmale, die von den sensorischen Objekteigenschaften SE umfasst werden können. Das primäre Abgleichen in der Datenstruktur 4 erfolgt also von einer erfassten Zuordnung eines Sortierstücks 2 anhand des Identifikators Id und der sensorischen Objekteigenschaft SE, da ein Vergleich dieser reduzierter Daten deutlicher rascher erfolgt als ein Vergleich von Abbildern. Wenn jedoch die erfasste sensorische Objekteigenschaft SE in der Datenstruktur 4 nicht vorhanden ist, kann das Abbild des Sortierstücks 2 zum Feststellen einer ordnungsgemäßen Nutzung bzw. zum Bestätigen eines Verdachtsmoments einer ordnungswidrigen Nutzung herangezogen worden, indem in der Datenstruktur 4 abgeglichen wird, ob zu dieser Zuordnung bereits ein Abbild in der Datenstruktur 4 existiert. Die Abbilder können maschinell und/oder an einem Bildschirmarbeitsplatz abgeglichen werden.

Gemäß einer Ausführungsform wird das Abbild eines Sortierstücks 2 zudem herangezogen, wenn die sensorische Objekteigenschaft SE von der Erfassungseinheit 10 nicht komplett automatisch erkannt werden kann. In diesem Fall wird die sensorische Objekteigenschaft SE ganz oder zumindest teilweise von einer Videocodierkraft codiert.

Figur 2 zeigt gemäß einer weiteren Ausführungsform der Erfindung ein Sortiersystem 8 für einen Sortierprozess eines Sortierstücks 2*, die eine Postsendung ist. Das Sortiersystem 8 umfasst eine Erfassungseinheit 10 und eine Steuereinheit 12, sowie eine Datenstruktur 4 und ein Logikmodul 14, die von der Steuereinheit 12 umfasst werden. Die Erfassungseinheit 10 ist zum Erfassen der sensorischen Objekteigenschaft SE* und des Identifikators Id* des Briefes 2 ausgestaltet und bildet ein sensorisches System aus, beispielsweise eine Kamera. Die Erfassungseinheit 10 ist zum Erfassen derjenigen Merkmale oder desjenigen Merkmals ausgebildet, welche in den sensorischen Objekteigenschaften SE* abgebildet werden, und des Identifikators Id* und umfasst alle hierzu notwendigen Erfassungsvorrichtungen. Merkmale können Sortierstückdimensionen, vorzugsweisse Abmessungen und/oder Volumen, Gewicht, Inhaltseigenschaft des Sortierstücks 2, Position des Identifikatorabbilds Id* auf dem Sortierstück 2, Strahlungsreflektionseigenschaften oder Fluoreszenzeigenschaften sein. Inhaltseigenschaften können beispielsweise mit einem Durchleuchtungsgerät ermittelt werden. Bei genügend genauer Erfassung sind alle diese Merkmale einzigartig für jedes Sortierstück 2, zu starke Abweichungen bzw. Veränderungen bei Erfassung des sensorischen Ojekteigenschaft SE* eines identischen Sortierstücks 2 an unterschiedlichen Positionen entlang der Sortierprozesskette und/oder an unterschiedlichen Zeitpunkten können eigentlich nur mit Beschädigungen erklärt werden.

In der Datenstruktur 4 sind Identifikatoren Id1, Id2, Id3, ... und sensorische Objekteigenschaften SE1, SE2, SE3, ... der Sortiergüter 2.1, 2.2, 2.3, ... abgespeichert. Die Steuereinheit 12 hat Zugriff auf die Datenstruktur 4 und ist mit dem Logikmodul 14 verbindbar. Die Steuereinheit ist ausgestaltet zum Abgleichen des erfassten Identifikators Id* und/oder der erfassten sensorischen Objekteigenschaft SE* mit den in der Datenstruktur 4 gespeicherten Identifikatoren Id1, Id2, Id3, ... und/oder sensorischen Objekteigenschaften SE1, SE2, SE3, ... und erhält Input vom Logikmodul 14, welches ausgestaltet ist, eine ordnungsgemäße und ordnungswidrige Verwendung des erfassten Identifikators Id* anhand eines Abgleichergebnisses der Steuereinheit 12 festzustellen. Das Logikmodul 14 ist ausgestaltet, die festgestellte ordnungsgemäße oder ordnungswidrige Verwendung an die Steuereinheit 12 zu übermitteln.

Das Logikmodul 14 stellt eine ordnungsgemäße Verwendung fest, wenn das Abgleichergebnis keine Zuordnung ist, die der erfassten eindeutigen Zuordnung von erfasstem Identifikator Id* und erfasster sensorischer Objekteigenschaft SE* widerspricht. Eine Übereinstimmung zweier Identifikatoren Id', Id*, aber keine Übereinstimmung der sensorischen Objekteigenschaften SE', SE* spricht dafür, dass ein Identifikator Id' missbräuchlich mehrfach verwendet wurde - einmal für das Sortierstück 2' und danach für das Sortierstück 2*. Um eine irrtümliche Klassifizierung als missbräuchliche Verwendung des Identifikators Id', die aufgrund Messungenauigkeiten und/oder leichten Veränderungen des Sortierstücks 2' im Laufe des Sortierprozesses geschieht, zu verhindern, kann ein Toleranzbereich für die Übereinstimmung der sensorischen Objekteigenschaften SE*, SE' definiert werden, innerhalb dessen eine Abweichung gerade noch tolerierbar ist. Dieser Toleranzbereich kann an die Steuereinheit 12 und/oder das Logikmodul 14 übermittelt werden. Eine missbräuchliche Verwendung bzw. dass eine in der Datenstruktur 4 abgespeicherte Zuordnung Id'<->SE' der erfassten Zuordnung Id*<->SE* widerspricht, wird dann nur festgestellt, wenn die Identifikatoren Id', Id* übereinstimmen, aber die sensorische Objekteigenschaft der Zuordnung SE' mit der erfassten sensorischen Objekteigenschaft SE* mit hinreichender Genauigkeit nicht übereinstimmt.

Bei einem ersten Auftauchen eines Sortierstücks 2* in der Sortierprozesskette sind die sensorischen Objekteigenschaften SE* typischerweise noch gar nicht oder zumindest noch nicht vollständig bekannt. Wenn die sensorischen Objekteigenschaften SE* auch Eigenschaften über die Art der Sendung (Großbrief, Kleinbrief oder Päckchen, ...) umfassen und diese in dem Identifikator Id* abgebildet werden (je ein eigener Code für jede Sendungsart), können die sensorischen Objekteigenschaften SE* jedoch auch vor einem ersten Auftauchen des Sortierstücks 2* aus dem Identifikator Id* heraus schon teilweise bekannt sein. In diesem Fall kann die sensorische Objekteigenschaft SE* zumindest teilweise in dem Identifikator Id* abgebildet sein, da der Identifikator Id* dann Informationen über die Art der Sendung umfasst. Bei dem ersten Erfassen liegt also noch gar keine oder zumindest keine vollständige Zuordnung in der Datenstruktur 4 vor, so dass kein Widerspruch vorliegt, wenn zu der erfassten Zuordnung keine Zuordnung in der Datenstruktur 4 gefunden wird. Für den Fall, dass in der Datenstruktur 4 keine Zuordnung der erfassten sensorischen Objekteigenschaft SE* und/oder des erfassten Identifikators Id* auffindbar ist, wird daher eine ordnungsgemäße Verwendung angenommen.

Wenn für ein Stückgut 2* eine ordnungswidrige Verwendung eines Identifikators Id* festgestellt wurde, kann das Sortierstück 2 mit einer Markierung versehen werden und/oder aus dem Sortierprozess ausgeschleust werden. Bei einer Weiterbehandlung muss sichergestellt werden, dass zumindest das Entgelt bei der Auslieferung einkassiert wird.

Gemäß einer Ausführungsform geht das Verfahren zum Feststellen einer ordnungsgemäßen Verwendung eines Identifikators Id, mit welchem ein Sortierstück 2 markiert ist, davon aus, dass jedes mit einem den Identifikator Id repräsentierenden Kennzeichen versehene Sortierstück 2 im Laufe der Zeit wenigstens einmal eine Erfassungseinheit 10, ausgebildet als sensorisches System , z.B. eine Kamera, passiert, an dem es möglich ist, folgende Daten zu erfassen und zu ermitteln: Den Identifikator Id des Sortierstücks 2 aus dem aufgebrachten, den Identifikator Id repräsentierenden Kennzeichen und sensorische Objekteigenschaften SE des Sortierstücks 2. Abhängig von der Sensorik umfassen diese eines oder mehrere der folgenden Merkmale: die Position des Kennzeichens, auf dem Sortierstück 2 befindliche Bildmuster und Texte und deren Position, ggf. relativ zur Position des Kennzeichens, Gewicht, Größe, Materialeigenschaften des Objekts.

Weiterhin wird davon ausgegangen, dass die sensorischen Objekteigenschaften SE des Sortierstücks 2 über den Identifikator Id zugreifbar in einer Datenhaltung als Datenstruktur 4 gespeichert werden. Passiert nun eines der betrachteten Sortierstücke 2* die Erfassungseinheit 10, werden der Identifikator Id* und die sensorischen Objekteigenschaften SE* erfasst bzw. ermittelt. Ergibt der Zugriff auf die Datenstruktur 4 über den Identifikator Id*=Id', dass zum Identifikator Id' noch keine sensorischen Objekteigenschaften SE' vorliegen, werden diese gespeichert. Liegen für den Identifikator Id*=Id' bereits sensorische Objekteigenschaften SE' vor, findet ein Vergleich der gespeicherten sensorischen Objekteigenschaften SE' mit den aktuell ermittelten bzw. erfassten sensorischen Objekteigenschaften SE* statt. Sind die sensorischen Objekteigenschaften SE*, SE' identisch oder genügend übereinstimmend, wird geschlossen, dass das Sortierstück 2* und der ermittelte Identifikator Id* zueinander passen. Liegen hingegen genügend signifikante Unterschiede der sensorischen Objekteigenschaften SE*, SE' vor, kann auf eine unerlaubte Nutzung der auf dem Sortierstück 2* befindlichen Kennung, umfassend den erfassten Identifikator Id*, geschlossen werden. Dieses Verfahren ist universell einsetzbar, sofern die oben genannten Voraussetzungen erfüllt sind. Annahmen darüber, wann und wo ein Objekt mit einer bestimmten Kennung auftreten kann bzw. darf, sind nicht notwendig, um auf Missbräuche zu schließen. Prozessabläufe müssen für dieses Verfahren nicht bekannt sein und berücksichtigt werden. Das Verfahren kann vollautomatisch betrieben werden. Mit heutiger Erkennungstechnik wären insbesondere im postalischen Umfeld bei geringsten Fehlerraten nahezu hundertprozentige Detektionsraten von Missbräuchen möglich. Im Vergleich zum bekannten Vorgehen müssen bei diesem Verfahren an Stelle der Bilder nur die für den Vergleich der Objekteigenschaften notwendigen Daten gespeichert werden, womit eine deutliche Reduktion der gespeicherten Datenmenge erzielt werden kann.

Gemäß einer weiteren Ausführungsform wäre anstelle der Speicherung der Daten, vorzugsweise der Zuordnung, in einer Datenstruktur 4 auch denkbar, die Daten direkt in dem Kennzeichen und somit dem Identifikator Id zu speichern. Dadurch könnte man auf eine Datenhaltung verzichten, müsste dies aber nicht. Die Konsequenz wäre allerdings, dass schon zum Zeitpunkt der Generierung des den Identifikator Id repräsentierenden Kennzeichens die sensorischen Objekteigenschaften SE des Sortierstücks 2 ermittelt werden müssten. Dies Vorgehen wäre bei Abgabe einer Postsendung an einem Postschalter problemlos möglich, wenn der Postschalter mit allen hierzu notwendigen Vorrichtungen ausgestattet wird. In einem Sortierprozess können auch gleichzeitig Sortierstücke 2' verarbeitet werden, deren Identifikator Id' die sensorischen Objekteigenschaften SE' bereits abbildet, und weitere Sortierstücke 2", deren Identifikatoren die sensorischen Objekteigenschaften SE" gar nicht oder nur zum Teil abbildet. Dann könnte jedoch nicht auf eine Datenhaltung verzichtet werden.

Gemäß einer Ausführungsform trägt der Identifikator Id selbst zur Eindeutigkeit der sensorischen Objekteigenschaften SE bei. Es werden Bildinhalte des Sortierstücks 2 in Relation zur Lage des Identifikators Id erfasst und gespeichert, so dass der Identifikator Id gewissermassen als "Nullpunkt eines Koordinatensystems" nutzbar ist.

Gemäß einer weiteren Ausführungsform können die sensorischen Objekteigenschaften SE den auf dem Sortierstück 2 angebrachten Identifikator Id, vorzugsweise Position und/oder Ausrichtung und/oder Größe des Identifikators Id, ganz oder zumindest teilweise umfassen. Aber auch die Beschaffenheit des angebrachten Identifikators kann von den sensorischen Objekteigenschaften SE umfasst sein. Auf diese Weise trägt der Identifikator Id selbst zur Eindeutigkeit der sensorischen Objekteigenschaft SE bei. So können auch zwei komplett gleichaussehende Sortierstücke 2, 2' anhand ihrer Identifikatoren Id, Id' voneinander unterschieden werden, wenn denn die Identifikatoren Id, Id' an zumindest leicht unterschiedlichen Positionen angebracht werden und/oder sich leicht voneinander unterscheiden.

Gemäß einer Ausführungsform sind die im Verlauf des Postsortierprozesses zu erfassenden Identifikatoren Id1, Id2, Id3 schon vor Beginn des Postsortierprozesses bekannt, da sie bei ihrer Generierung und vor Ausgabe an den Postkunden in der Datenstruktur 4 abgespeichert worden sind. Die sensorischen Objekteigenschaften SE1, SE2, SE3 sind hingegen vor einem Erfassen durch die Erfassungseinheit 10 noch nicht bekannt. Identifikatoren können bereits in der Datenstruktur 4 vorhanden sein, wenn diese, also ohne bereits vorhandenen eindeutigen Bezug zum Sortierstück 2, in die Datenstruktur 4 aufgenommen wurden. Wenn nun bei einem Abgleichen der erfassten Zuordnung von erfasstem Identifikator Id1 und erfasster sensorischer Objekteigenschaft SE1 in der Datenstruktur 4 nur der Identifikator Id1 und keine entsprechende Zuordnung gefunden wird, liegt keine missbräuchliche Verwendung des Identifikators Id1 vor, da die sensorische Objekteigenschaft SE1 ja noch nicht in der Datenstruktur 4 abgespeichert werden konnte. Das Vorhandensein einer Zuordnung Id1<->SE' in der Datenstruktur 4, wobei die sensorische Objekteigenschaft SE' der Datenstruktur 4 mit hinreichender Genauigkeit nicht mit der erfassten sensorischen Objekteigenschaft SE1 übereinstimmt, ist jedoch ein starkes Indiz für eine nicht ordnungsgemäße Verwendung. Bei diesem Vorgehen führt der erfasste Identifikator Id1 rasch und effizient zu der Zuordnung in der Datenstruktur 4, da zwischen dem von der Erfassungseinheit 10 erfassten Identifikator Id1 und dem Identifikator Id' eine eindeutige Zuordnung besteht (1:1 Match).

Gemäß einer weiteren Ausführungsform können die sensorischen Objekteigenschaften SE zur Bestimmung herangezogen werden, ob die Höhe des Entgeltes, die für den Identifikator Id entrichtet wurde, korrekt ist.

Um bei einem noch nicht erfolgten Erfassen der zu einem Sortierstück 2 gehörigen Zuordnung und/oder nur des Identifikators oder der sensorischen Objekteigenschaft nicht fälschlicherweise eine missbräuchliche Verwendung festzustellen, kann für den Fall, dass in der Datenstruktur 4 keine Zuordnung der erfassten sensorischen Objekteigenschaft und/oder des erfassten Identifikators auffindbar ist, eine ordnungsgemäße Verwendung angenommen werden. Dieser Fall bedeutet einfach, dass noch keine vollständige Zuordnung vorliegt oder nur einer der beiden Werte, sensorische Objekteigenschaft oder Identifikator, wurde bereits erfasst. Identifikatoren können bereits in der Datenstruktur 4 vorhanden sein, wenn diese bei ihrer Generierung, also ohne bereits vorhandenen eindeutigen Bezug zum Sortierstück 2, in die Datenstruktur 4 aufgenommen wurden. So kann nur schwer eine komplette Fälschung von Identifikatoren erfolgen, da der gesamte generierte Satz in der Datenstruktur 4 abgebildet ist.

### Bezugszeichenliste

- 2: Sortierstück
- 4: Datenstruktur
- 8: Sortiersystem
- 10: Erfassungseinheit
- 12: Steuereinheit
- 14: Logikmodul
- Id: Identifikator
- SE: sensorische Objekteigenschaft

## Patentansprüche

1. Verfahren zum Feststellen einer ordnungsgemäßen Verwendung eines eindeutigen, auf einem Sortierstück (2), vorzugsweise einer Postsendung oder einem Gepäckstück, angebrachten Identifikators (Id*) in einem Sortierprozess, wobei das Sortierstück (2) anhand eindeutiger sensorischer Objekteigenschaften (SE*) identifizierbar ist und mittels des Identifikators (Id*) eine Berechtigung für den Sortierprozess nachweisbar ist, umfassend die Verfahrensschritte:
a) Bereitstellen einer Datenstruktur (4), in welcher Identifikatoren (Id1, Id2, Id3, ...) und sensorische Objekteigenschaften (SE1, SE2, SE3, ...) Sortierstücken (2.1, 2.2, 2.2, ...) eindeutig zugeordnet abspeicherbar sind;
b) Erfassen des Identifikators (Id*) des Sortierstücks (2) und einer sensorischen Objekteigenschaft (SE*) des Sortierstücks (2) als erfasste eindeutige Zuordnung;
c) Abgleichen des erfassten Identifikators (Id*) und/oder der erfassten sensorischen Objekteigenschaft (SE*) mit den bereits in der Datenstruktur (4) gespeicherten Identifikatoren (Id1, Id2, Id3, ...) und/oder sensorischen Objekteigenschaften (SE1, SE2, SE3, ...) ; und
d) Feststellen einer ordnungsgemäßen Verwendung, wenn in der Datenstruktur (4) beim Abgleichen keine Zuordnung gefunden wird, die der erfassten eindeutigen Zuordnung von erfasstem Identifikator (Id*) und erfasster sensorischer Objekteigenschaft (SE*) widerspricht.

2. Verfahren nach Anspruch 1, zudem umfassend den Verfahrensschritt
bei festgestellter ordnungsgemäßer Verwendung Abspeichern der erfassten eindeutigen Zuordnung von erfasstem Identifikator (Id*) und erfasster sensorischer Objekteigenschaft (SE*) in der Datenstruktur (4).

3. Verfahren nach einem der vorangehenden Ansprüche, **dadurch gekennzeichnet, dass**
die sensorischen Objekteigenschaften (SE*) den auf dem Sortierstück (2) angebrachten Identifikator (Id*), vorzugsweise Position und/oder Ausrichtung und/oder Größe des Identifikators (2), ganz oder zumindest teilweise umfassen.

4. Verfahren nach einem der vorangehenden Ansprüche, **dadurch gekennzeichnet, dass**
eine Zuordnung der erfassten eindeutigen Zuordnung von erfasstem Identifikator (Id*) und erfasster sensorischer Objekteigenschaft (SE*) widerspricht, wenn zwar der Identifikator der Zuordnung (Id') mit dem erfassten Identifikator (Id*) übereinstimmt, aber die sensorische Objekteigenschaft der Zuordnung (SE') mit der erfassten sensorischen Objekteigenschaft SE* mit hinreichender Genauigkeit nicht übereinstimmt.

5. Verfahren nach einem der vorangehenden Ansprüche, **dadurch gekennzeichnet, dass**
für den Fall, dass in der Datenstruktur (4) keine Zuordnung der erfassten sensorischen Objekteigenschaft (SE*) und/oder des erfassten Identifikators (Id*) auffindbar ist, wird eine ordnungsgemäße Verwendung angenommen.

6. Verfahren nach einem der vorangehenden Ansprüche, **dadurch gekennzeichnet, dass**
die sensorische Objekteigenschaft (SE*) zumindest teilweise in dem Identifikator (Id*) abgebildet ist.

7. Verfahren nach einem der vorangehenden Ansprüche, zudem umfassend:
a) Erfassen eines Abbilds des Sortierstücks (2);
b) Abspeichern des Abbilds als Zuordnung in der Datenstruktur (4) und
c) Heranziehen des Abbilds des Sortierstücks (2) zum Feststellen einer ordnungsgemäßen Nutzung, indem in der Datenstruktur (4) abgeglichen wird, ob zu dieser Zuordnung bereits ein Abbild in der Datenstruktur (4) existiert, wenn mit hinreichender Genauigkeit festgestellt wurde, dass die erfasste sensorische Objekteigenschaft (SE*) in der Datenstruktur (4) nicht vorhanden ist.

8. Verfahren nach einem der vorangehenden Ansprüche, **dadurch gekennzeichnet, dass**
die sensorische Objekteigenschaft (SE*) eine oder mehrere der folgenden Merkmale umfasst:
a) eine Sortierstückdimension, vorzugsweisse Abmessungen und/oder Volumen;
b) Gewicht;
c) Inhaltseigenschaft des Sortierstücks (2), vorzugsweise erhaltbar durch Röntgenstrahlung;
d) Position des Identifikators (Id*) auf dem Sortierstück (2) ;
e) Strahlungsreflektionseigenschaft;
f) Fluoreszenzeigenschaft;
g) Materialeigenschaften des Sortierstücks (2);
h) Beschriftungen des Sortierstücks (2).

9. Verfahren nach einem der vorangehenden Ansprüche, zudem umfassend den Verfahrensschritt
bei festgestellter ordnungswidriger Verwendung des angebrachten Identifikators (Id*) wird das Sortierstück (2) mit einer Markierung versehen.

10. Verfahren nach einem der vorangehenden Ansprüche, zudem umfassend den Verfahrensschritt
Ausschleusen des Sortierstücks (2) aus dem Sortierprozess bei festgestellter ordnungswidriger Verwendung des angebrachten Identifikators (Id*).

11. Verfahren nach einem der vorangehenden Ansprüche, **dadurch gekennzeichnet, dass**
der angebrachte Identifikator (Id*) maschinenlesbar und/oder menschenlesbar ist.

12. Sortiersystem (8) für einen Sortierprozess von Sortierstücken (2), vorzugsweise Postsendungen oder Gepäckstücken, wobei das Sortierstück (2) anhand eindeutiger sensorischer Objekteigenschaften (SE*) identifizierbar ist und mittels des Identifikators (Id*) eine Berechtigung für den Sortierprozess nachweisbar ist, umfassend:
a) eine zum Erfassen der sensorischen Objekteigenschaft (SE*) und des Identifikators (Id*) eines Sortierstücks (2) ausgestaltete Erfassungseinheit (10);
b) eine Datenstruktur (4), in welcher Identifikatoren (Id1, Id2, Id3, ...) und sensorische Objekteigenschaften (SE1, SE2, SE3, ...) der Sortiergüter (2.1, 2.2, 2.3, ...) als eindeutige Zuordnung speicherbar sind;
c) eine die Datenstrukur (4) umfassende Steuereinheit (12), ausgestaltet zum Abgleichen des erfassten Identifikators (Id*) und/oder der erfassten sensorischen Objekteigenschaft (SE*) mit den in der Datenstruktur (4) gespeicherten Identifikatoren (Id1, Id2, Id3, ...) und/oder sensorischen Objekteigenschaften (SE1, SE2, SE3, ...); und
d) ein Logikmodul (14), welches ausgestaltet ist, eine ordnungsgemäße und ordnungswidrige Verwendung des erfassten Identifikators (Id*) anhand eines Abgleichergebnisses der Steuereinheit (12) festzustellen und die festgestellte ordnungsgemäße oder ordnungswidrige Verwendung an die Steuereinheit (12) zu übermitteln.

13. Sortiersystem (8) nach Anspruch 12, **dadurch gekennzeichnet, dass**
das Logikmodul (14) ausgestaltet ist, eine ordnungsgemäße Verwendung festzustellen, wenn das Abgleichergebnis keine Zuordnung ist, die der erfassten eindeutigen Zuordnung von erfasstem Identifikator (Id*) und erfasster sensorischer Objekteigenschaft (SE*) widerspricht.

14. Sortiersystem (8) nach Anspruch 13, **dadurch gekennzeichnet, dass**
eine Zuordnung der erfassten eindeutigen Zuordnung von erfasstem Identifikator (Id*) und erfasster sensorischer Objekteigenschaft (SE*) widerspricht, wenn der Identifikator der Zuordnung (Id') übereinstimmt mit dem erfassten Identifikator (Id*), aber die sensorische Objekteigenschaft der Zuordnung (SE') mit der erfassten sensorischen Objekteigenschaft SE* mit hinreichender Genauigkeit nicht übereinstimmt.

15. Sortiersystem (8) nach einem der Ansprüche 12 bis 14, **dadurch gekennzeichnet, dass**
die sensorischen Objekteigenschaften (SE*) den auf dem Sortierstück (2) angebrachten Identifikator (Id*), vorzugsweise Position und/oder Ausrichtung und/oder Größe des Identifikators (2), ganz oder zumindest teilweise umfassen.
